# EUROPEAN PATENT SPECIFICATION

(11) **EP 3 827 930 B1**
(45) Date of publication and mention of the grant of the patent: **21.10.2026**
(21) Application number: 21151968.1
(22) Date of filing: 16.01.2019
(51) Int. Cl.: B25F 5/02, B23Q 11/00

(54) **DUST EXTRACTION SHROUD FOR POWER TOOL**
STAUBEXTRAKTIONSHÜLSE FÜR EIN ELEKTROWERKZEUG
CARÉNAGE D'EXTRACTION DE POUSSIÈRE POUR OUTIL ÉLECTRIQUE

(30) Priority: 19.01.2018 GB 201800896
(43) Date of publication of application: 02.06.2021
(62) Document number(s) of the earlier application(s) in accordance with Art. 76 EPC: 19152054.3 / 3 527 329
(73) Proprietor: Black & Decker Inc., New Britain, CT 06053 (US)
(72) Inventor: HEIMRICH, Tim, 65520 Bad Camberg (DE)
(74) Representative: Slingsby Partners LLP

(56) References cited:
- EP-A1- 1 457 288
- EP-A1- 2 474 385
- EP-A1- 3 060 371
- DE-A1- 102016 014 210
- US-A1- 2006 153 650

## Description

The present invention relates to a dust extraction shroud for use with a stop bit.

In many countries, legislation defining working conditions on building sites is becoming increasingly stringent. In particular, legislation governing levels of airborne dust encountered by users of power tools are becoming increasingly important.

Many types of building work involve drilling into and/or demolishing walls and concrete structures, with hand held tools such as drills and combined hammer drills. Such drilling work typically involves releasing large amounts of dust into the air, which can be hazardous if inhaled, particularly dust containing fine particulate matter such as quartz. For this reason, it is desirable to protect the tool user from inhaling the dust.

EP1457288 describes a dust extraction shroud or a portable power tool in which the drill bit passes through the shroud whilst it is held flush against the wall or structure being drilled. The shroud is connected to a source of suction which removes dust from the shroud as it is being produced.

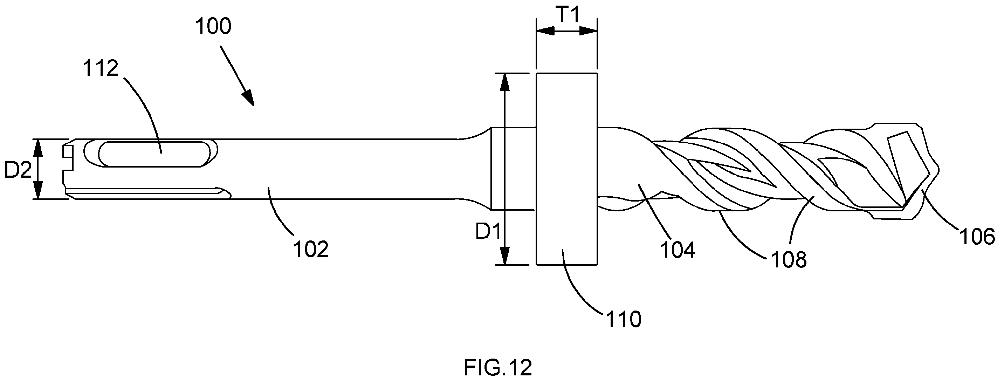

Figure 12 shows a stop bit. The stop bit comprises an elongate shank 100, having a longitudinal axis and a circular cross section, with a connecting end 102 and a cutting end 104. The cutting end 104 comprises a drill bit tip 106 formed on the end of the cutting end 104, which is used to penetrate a work piece. A series of helical ridges 108 extend around the shank away from the drill bit tip 106 which remove debris, generated by the cutting action of the drill bit tip 106, away from the drill bit tip 106. The connecting end 102 can be smooth so that it can be grip by the jaws of a chuck. Alternatively, it can comprise the grooves 112 of the SDS PLUS or SDS MAX connection system for use with an appropriate tool holder. A radial flange 110 is formed on the shank 100 between the connecting end 102 and the cutting end 104. The flange 110 has a diameter D1 which is substantially larger than the diameter of the shank D2 and extends in a direction which is perpendicular to a longitudinal axis of the shank 100. The flange 110 has a uniform thickness T1. The flange 110 is located at a pre-determined distance from the drill bit tip 106. The purpose of the flange 110 is to limit the amount the drill bit tip can penetrate the surface of a work piece. Once the drill it tip 106 has penetrated the surface of the work piece by the pre-determined distance, the side of the flange 110 engages with the surface and prevents the drill bit tip from penetrating any further.

EP2474385 forms the closest piece of prior art and comprises the features in pre-characterising portion of claim 1.

EP1457288, DE102016014210, EP3060371 and US2006153650 disclose shroud for use with dust extractors.

Accordingly, there is provided a shroud for a dust extractor comprising a body portion and an engaging portion;
wherein the body portion comprises:
a tubular housing having a first inlet formed at one end defining a first opening and a second inlet formed at the other end defining a second opening, wherein the tubular housing forms a passageway which connects the two openings, and which comprises a longitudinal axis;
wherein the engaging portion comprises:
   a tubular housing which connects at one end to a side of the body portion and which forms a passageway which comprises a longitudinal axis (298) and which extends the length of the tubular housing of the engaging portion (13), the tubular housing, at one end, connects to a third opening formed through the wall of the body portion to connect the passageway of the engaging portion with the passageway of the body portion and at the other end, remote from the body portion, comprises a third inlet defining a fourth opening;
   wherein there is provided a seal mounted in the second inlet of the body portion, the outer edge of the seal being attached to the periphery of the second inlet, the seal projecting radially inwardly towards the longitudinal axis of the tubular body,
   wherein at least a part of the wall which forms the third inlet of the engaging portion extends further away from the rest of the wall which forms the third inlet to form a top wall;
   wherein the top wall is resiliently deformable in order to bend in a direction perpendicular to the longitudinal axis of the engaging portion and comprises a recess formed on one side of the top wall which is capable of engaging a ridge formed on a dust extractor, when the shroud is mounted on a dust extractor, to lock the shroud to the dust extractor.

The recess can be formed on the side of the top wall which faces the longitudinal axis of the engaging portion.

The recess can also be formed in close proximity to the end of the top wall.

The longitudinal axis of the body portion may extends perpendicularly to the longitudinal axis of the engaging portion.

A finger engagement zone may be provided on the end of the top wall. At least one rubber grip may be formed on the finger engagement zone.

The tubular housing of the engaging portion may be rectangular in cross section to form four walls. If so, the edges of two opposite side walls which form two sides of the third inlet may be curved in a symmetrical manner. One of the four walls may be extended to form the top wall. The wall which is extended to form the top wall may be located between the two sides of the third inlet which are curved in a symmetrical manner.

The radial length L1 the seal preferably is less that the length L2 of the tubular housing.

The seal may be mounted in the second inlet of the body portion in a freely rotatable manner.

The passageway of the tubular housing of the body portion may be circular in cross section. If so, the inner radius of the passageway in cross section may be greater than 20mm.

Accordingly, there is further provided a shroud for a dust extractor comprising a body portion and an engaging portion;
wherein the body portion comprises:
a tubular housing having a first inlet formed at one end defining a first opening and a second inlet formed at the other end defining a second opening, wherein the tubular housing forms a passageway which connects the two openings, and which comprises a longitudinal axis;
wherein the engaging portion comprises:
   a tubular housing which connects at one end to a side of the body portion and which forms a passageway which comprises a longitudinal axis and which extends the length of the tubular housing of the engaging portion, the tubular housing, at one end, connects to a third opening formed through the wall of the body portion to connect the passageway of the engaging portion with the passageway of the body portion and at the other end, remote from the body portion, comprises a third inlet defining a fourth opening;
   wherein there is provided a seal mounted in the second inlet of the body portion, the outer edge of the seal being attached to the periphery of the second inlet, the seal projecting radially inwardly towards the longitudinal axis) of the tubular body; wherein the radial length L1 the seal is less that the length L2 of the tubular body.

Accordingly, there is yet further provided a shroud for a dust extractor comprising a body portion and an engaging portion;
wherein the body portion comprises:
a tubular housing having a first inlet formed at one end defining a first opening and a second inlet formed at the other end defining a second opening, wherein the tubular housing forms a passageway which connects the two openings, and which comprises a longitudinal axis;
wherein the engaging portion comprises:
   a tubular housing which connects at one end to a side of the body portion and which forms a passageway which comprises a longitudinal axis and which extends the length of the tubular housing of the engaging portion, the tubular housing, at one end, connects to a third opening formed through the wall of the body portion to connect the passageway of the engaging portion with the passageway (208) of the body portion and at the other end, remote from the body portion, comprises a third inlet defining a fourth opening;
   wherein there is provided a seal mounted in the second inlet of the body portion, the outer edge of the seal being attached to the periphery of the second inlet, the seal projecting radially inwardly towards the longitudinal axis of the tubular body;
wherein the seal is mounted in the second inlet of the body portion in a freely rotatable manner.

Accordingly, there further is provided a shroud for a dust extractor comprising a body portion and an engaging portion;
wherein the body portion comprises:
a tubular housing having a first inlet formed at one end defining a first opening and a second inlet formed at the other end defining a second opening, wherein the tubular housing forms a passageway which connects the two openings, and which comprises a longitudinal axis;
wherein the engaging portion comprises:
   a tubular housing which connects at one end to a side of the body portion and which forms a passageway which comprises a longitudinal axis and which extends the length of the tubular housing of the engaging portion, the tubular housing, at one end, connects to a third opening formed through the wall of the body portion to connect the passageway of the engaging portion with the passageway of the body portion and at the other end, remote from the body portion, comprises a third inlet defining a fourth opening;
   wherein there is provided a seal mounted in the second inlet of the body portion, the outer edge of the seal being attached to the periphery of the second inlet, the seal projecting radially inwardly towards the longitudinal axis of the tubular body; wherein the passageway of the tubular housing of the body portion is circular in cross section;
wherein the inner radius of the passageway in cross section is greater than 20mm.

There is further provided a dust extraction apparatus comprising:
a main body;
a telescopic arm which is attached to and extends away from the main body;
a stop attached to the end of the telescopic arm remote from the body;
a shroud in accordance with any of the previous aspects of the present invention mounted on the stop;
wherein the stop comprises a insertion tube and end piece, the insertion tube being attached to the end piece;
wherein the end piece comprises a ridge;
wherein, when the shroud is mounted on the stop, the insertion tube is inserted through the third inlet and into the passageway of the engaging portion until the third inlet abuts against the end piece and the ridge engages with the recess.

The top wall may flex as the insertion tube is inserted into the passage of the engaging portion to enable the end of the top wall to pass over the ridge prior to the ridge aligning with and engaging the recess.

The resilient nature of the top wall preferably holds ridge in engagement with the recess.

When the shroud is mounted on the stop, the top wall may wrap around the end piece.

The tubular housing of the engaging portion may be rectangular in cross section to form four walls;
wherein the edges of two opposite side walls which form two sides of the third inlet are curved in a symmetrical manner;
wherein, when the shroud is mounted on the stop, the two opposite curved side walls abut against the end piece. When the shroud is mounted on the stop, the bottom wall preferably abuts against the end piece.

Accordingly, there is provided a shroud in accordance with claim 1.

A prior art design of shroud and dust extractor is described below with reference to Figures 1 to 11. Preferred embodiments of the present invention is also described below, by way of example only and not in any limitative sense, with reference to the Figures 13 to 24.
Figure 1 is a perspective view from the front and one side of a prior art dust extraction shroud;
Figure 2 is a rear perspective view from one side of the shroud of Figure 1;
Figure 3 is a rear view of the shroud of Figure 1;
Figure 4 is a front view of the shroud of Figure 1;
Figure 5 is a front perspective view from one side of a dust extraction apparatus including the shroud of Figure 1 with a telescopic arm thereof in an extended condition;
Figure 6 is a rear perspective view from one side of the dust extraction apparatus of Figure 5;
Figure 7 is a front perspective view corresponding to Figure 5 of the dust extraction apparatus of Figure 5 in which the telescopic arm has been fully compressed into the housing of the apparatus;
Figure 8 is a side view of the apparatus of Figure 7;
Figure 9 is a side view of the apparatus of Figure 5;
Figure 10 is a side view of the apparatus of Figure 9 and part of a power drill mounted thereto;
Figure 11 is a side view corresponding to Figure 10 of the apparatus of Figure 8 and part of the power drill mounted thereto;
Figure 12 shows a stop bit;
Figure 13 shows a front perspective view of the shroud mounted on a stop of a dust extractor in accordance with an embodiment of the present invention;
Figure 14 shows a rear perspective view of the shroud mounted on the stop in Figure 13;
Figure 15 shows a front view of the shroud;
Figure 16 shows a cross sectional view of the shroud mounted on the stop (without the telescopic arm or depth stop of the dust extractor);
Figure 17 shows a cross sectional view of the top part of the seal mounted within the body portion of the shroud;
Figure 18 shows the stop (without the telescopic tube of the dust extractor) with the shroud latched onto the end piece;
Figure 19 shows the stop (without the telescopic tube of the dust extractor) without the shroud latched onto the end piece;
Figure 20 shows a rear view of the shroud mounted on the stop (without the telescopic arm or depth stop of the dust extractor;
Figure 21 shows an inside view of the body portion of the shroud without the seal when mounted on the stop;
Figure 22 shows the plastic clam shell of the shroud;
Figure 23 shows a schematic diagram of the body portion of the shroud with a stop bit penetrating it; and
Figure 24 shows a schematic diagram +of the body portion of the shroud with a stop bit penetrating it according to another embodiment of the present invention.

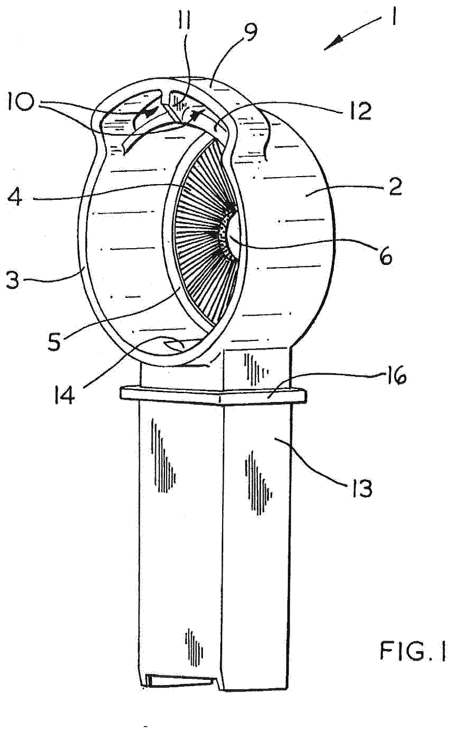

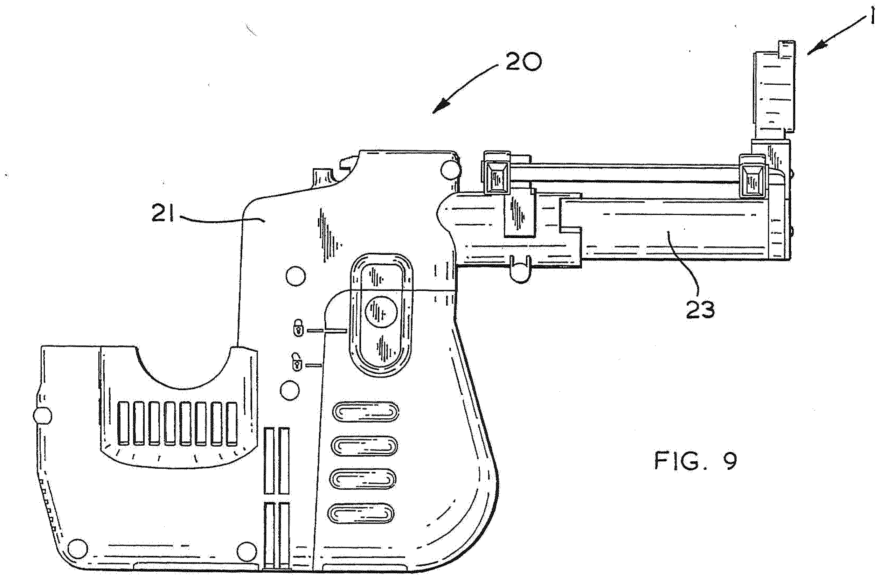

A prior art design of shroud and dust extractor will not be described with reference to Figures 1 to 11.

Referring to Figures 1 to 4, a dust extraction shroud 1 is formed from moulded plastic material and has a body portion 2 of substantially circular cross-section. The body portion 2 has a rim 3 adapted to be placed against a wall or other structure to be drilled. Rim 3 defines a first inlet and is substantially flat such that when placed against a wall there is little or no space between the wall and the edges of the inlet.

A circular brush 4 is disposed on the opposite side of body portion 2 to the rim 3, the bristles of brush 4 extending radially inwardly from a circular rim 5 and end at a point short of the central axis of body portion 2, such that a circular gap 6 defining a third inlet is left in the centre of the brush 4.

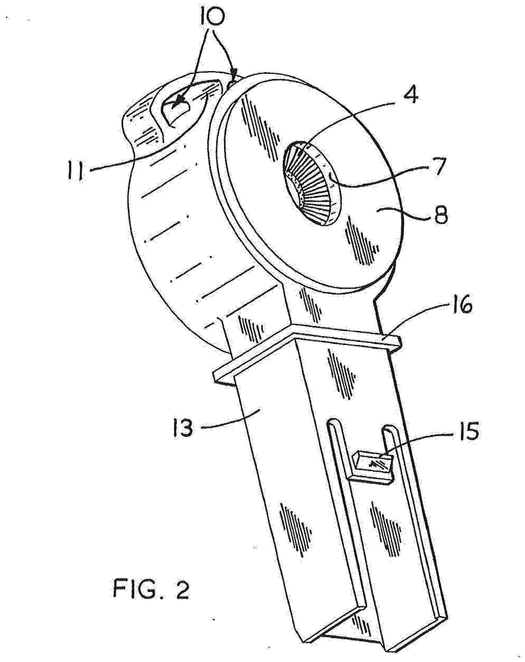

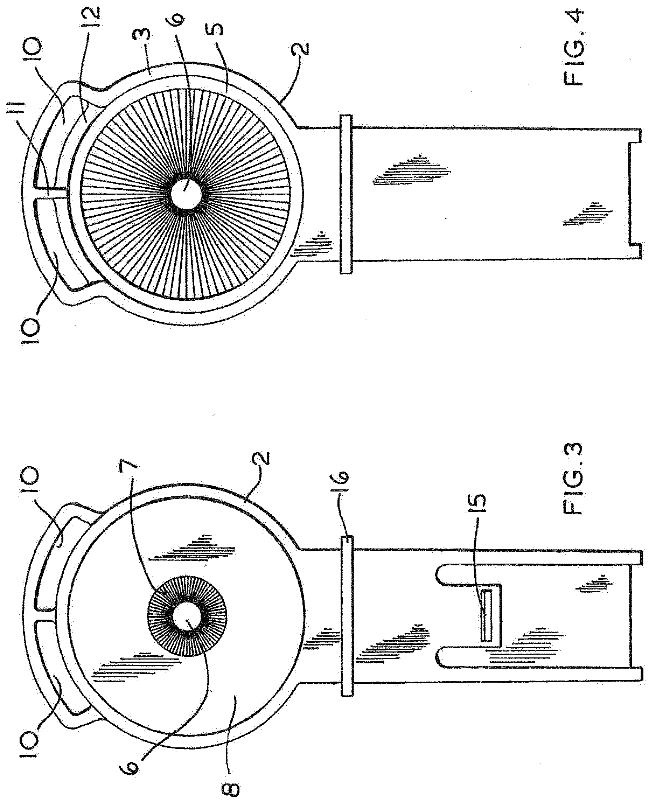

A circular aperture 7 is provided on rear face 8 of body portion 2, the aperture 7 being larger than the circular gap 6 in the brush 4. This feature is best shown in Figures 2 and 3. A drill bit (not shown) of a hammer drill, the drill bit having a substantially circular cross-section, can pass through aperture 7 and the circular gap 6 in the middle of brush 4 such that the drill bit (not shown) is able to come into contact with a wall or other surface engaged by rim 3. The brush 4 acts as a seal to firstly restrict the flow of air into body portion 2 via aperture 7, and secondly to restrict the flow of dust out of body portion 2 past the brush 4.

The body portion 2 also has a protruding collar 9 which extends outwardly from the upper surface of body portion 2. The collar 9 defines two rearwardly disposed inlets 10, separated by a supporting rib 11, between the collar 9 and the adjacent cylindrical part of body portion 2, the inlets 10 being on the side of collar 9 remote from rim 3. A shortened portion 12 of body portion 2 (this feature is best shown in Figure 1) forms the inner surface of inlets 10. As a result of the fact that the shortened portion 12 does not extend as far forward as rim 3, the intake of air is permitted into body portion 2 through inlets 10 when the shroud 1 is pressed against a workpiece surface.

An engaging portion 13 of generally uniform rectangular cross-section extends downwardly from the bottom of body portion 2. An outlet 14 is formed in the bottom face of body portion 2 such that air is permitted to flow out of body portion 2 through hollow engaging portion 13.

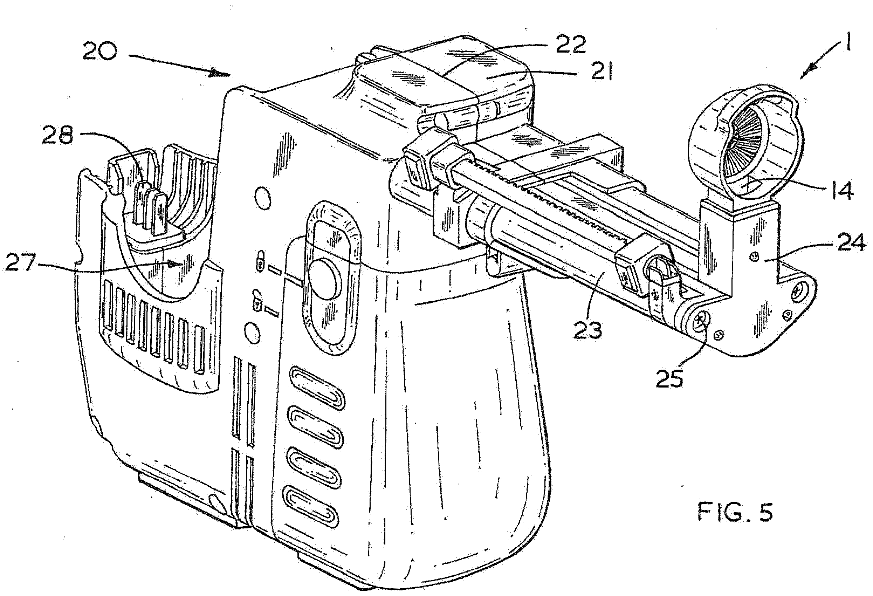

Referring to Figures 2 and 3, the engaging portion 13 has a generally uniform rectangular cross-section to enable the shroud 1 to be slid in and out of a corresponding rectangular receiving member 24 on a dust extraction apparatus (Figure 5). A resilient clip 15 and a stop 16, which extends around the entire outer surface of engaging portion 13, combine to hold the shroud 1 rigidly in place in the corresponding receiving member 24. This feature will be described in more detail below.

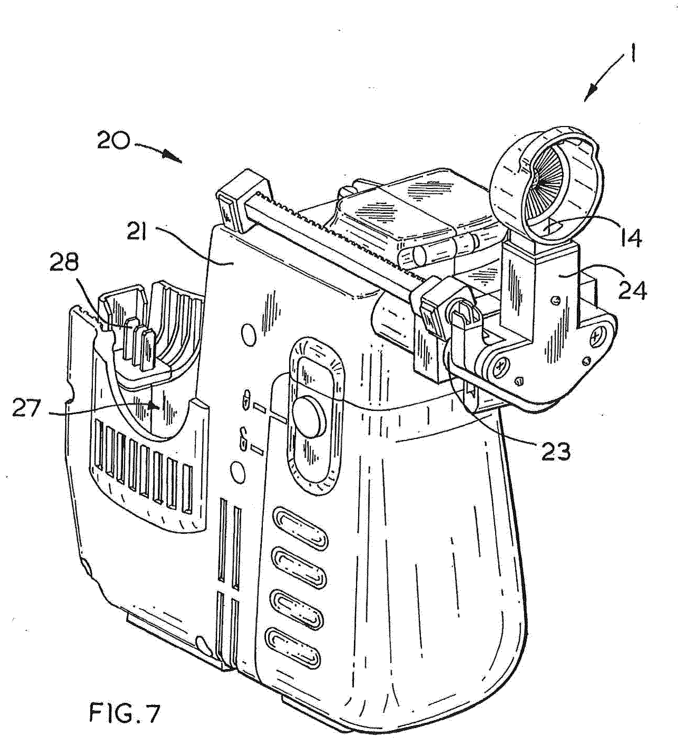

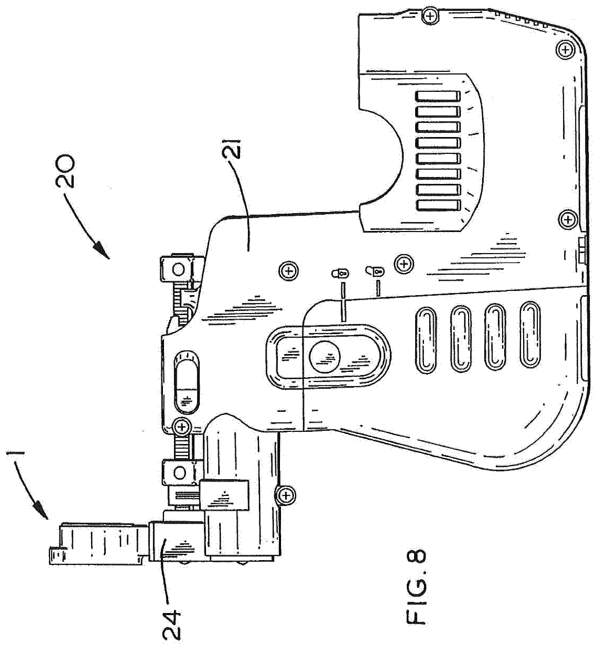

Referring now to Figures 5 to 9, a dust extraction apparatus 20 incorporating the shroud 1 comprises a housing 21 of a durable plastics material formed from two clam shell halves and separated by centre line 22. This type of construction is well-known to persons skilled in the art and will not be described in further detail. The dust extraction apparatus 20 has a forwardly extending telescopic arm 23. The telescopic arm is shown fully extended in Figures 5, 6 and 9, and is shown fully retracted into housing 21 in Figures 7 and 8.

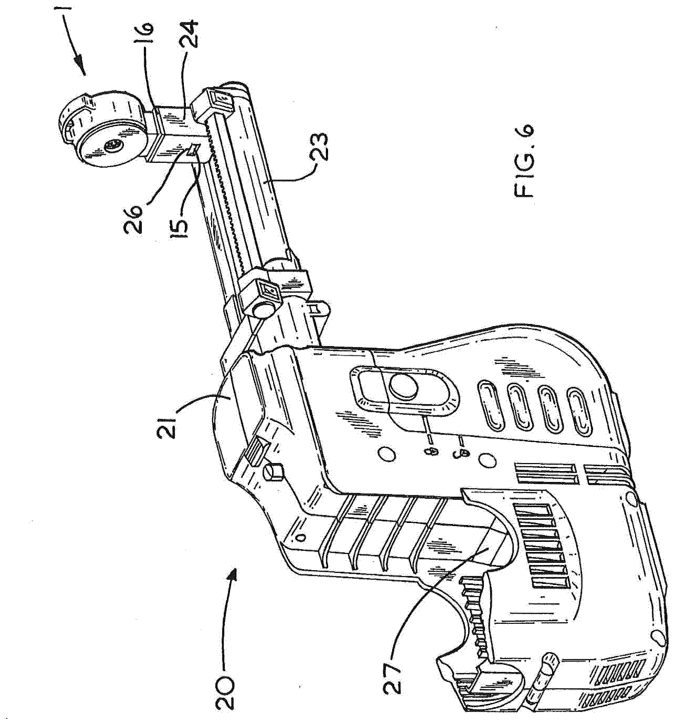

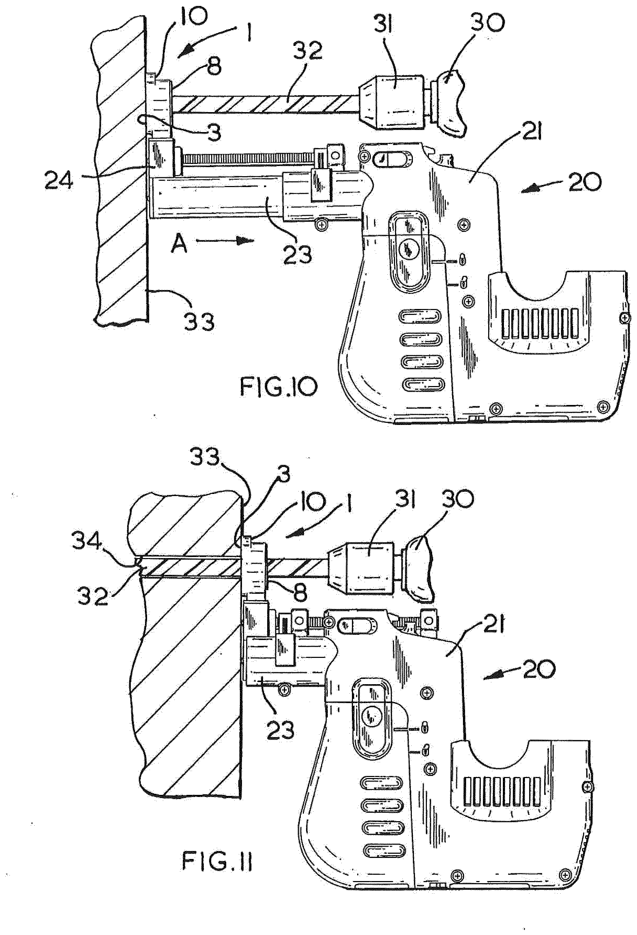

A receiving member 24 of generally rectangular cross-section is attached to the forward end of telescopic arm 23 by a pair of screws 25 and extends upwardly from telescopic arm 23. The engaging portion 13 (Figure 1) of shroud 1 is formed so that it can be slidingly received in the receiving member 24. Referring specifically to Figure 6, a rectangular aperture 26 is formed in the rear face of receiving member 24 such that resilient clip 15 of the engaging portion 13 (Figure 2) engages aperture 26, and the stop 16 engages the upper surface of receiving member 24. In this way, it can be seen that the shroud 1 is held in place in receiving member 24 at the forward end of telescopic arm 23. In order to facilitate the release of the shroud 1, for example to replace the shroud 1 when brush 4 has worn out, a user would depress resilient clip 15 through aperture 26 allowing a user to slide the shroud 1 out of engagement with receiving member 24. It will also be appreciated by persons skilled in the art that the height of shroud 1 relative to telescopic arm 23 can be adjusted by sliding the engaging portion 13 in receiving member 24, for example to accommodate power tools (Figure 10) of different dimensions.

The telescopic arm 23 is hollow and connected to receiving member 24. As a result of this, air is able to flow through shroud outlet 14, down through receiving member 24, through the telescopic arm 23 and into the interior of housing 21.

A fan (not shown) powered by an electric motor (not shown) disposed inside housing 21 sucks air into shroud outlet 14, and through telescopic arm 23. The air is then passed through a filter, for example a cylindrical filter, such that dust particles contained in air passing through the filter are retained inside the filter element, and the filtered air is then expelled from an outlet (not shown). This type of filter mechanism is well known to persons skilled in the art and will therefore not be described in greater detail.

The dust extraction apparatus 20 further comprises a recessed rear portion 27. Referring to Figures 5 and 7, three terminal blades 28 are adapted to be received in corresponding female terminals (not shown) of a power tool such as a hammer drill (Figure 10). The power tool is adapted to slot into recess 27 and lock into place such that the drill or hammer bit of the tool lies parallel to the telescopic arm 23 and passes through aperture 7 and brush 4 into shroud 1.

The power supply of the power tool is then used to provide electrical power for the suction apparatus of dust extraction apparatus 20. In this way, the dust extraction apparatus 20 does not have to carry its own power supply and is therefore less heavy and bulky.

Referring now to Figures 10 and 11, the operation of the dust extractor when combined with a power drill will now be described.

A power drill 30 mounted to and providing power for the dust extraction apparatus 20 of Figures 5 to 9, includes a chuck 31 and a drill bit 32. The drill bit 32 passes into the back of shroud 1 via aperture 7 (Figure 2) and through brush 4 (Figure 2) such that the ends of the bristles of brush 4 contact the drill bit 32 and form a partial seal around the drill bit 32. In Figure 10, the drill bit 32 extends forwardly so as to just contact the surface of wall 33. The shroud 1 is also in contact with wall 33 such that the 3 is held flush against the wall 33.

In the operation of the drill, as the user applies pressure and the drill bit 32 is driven into the wall 33, this causes telescopic arm 23 to retreat into the extractor housing 21. As a result of this the shroud 1 remains in contact with wall 33, whilst the drill bit 32 is permitted to penetrate wall 33. Dust produced by the action of the drill bit 32 is therefore prevented from leaving the interior of shroud 1, other than via outlet 14.

At the same time, the dust extractor 20 is in operation drawing air into inlets 10, across drill bit 32, down through receiving member 24, through telescopic arm 23 and into the interior of housing 21. In this way, the dust produced by the drill bit is removed from the immediate vicinity of drill bit 32, and filtered out of the airstream by a filter (not shown) disposed inside housing 21 such that air expelled from the dust extractor outlets (not shown) is clean.

When the required hole 34 has been drilled into wall 33, the drill is deactivated. The dust extraction apparatus 20 is provided with a timer (not shown) that continues to operate the dust extractor for a predetermined time, for example 30 seconds, after the drill has been deactivated. As the drill bit 32 is pulled out of wall 33, the telescopic arm 23 is spring-loaded such that it advances along drill bit 32 and remains in contact with wall 33. As a result of this, any dust produced after deactivation of the drill and removal of the drill bit from the wall is also removed.

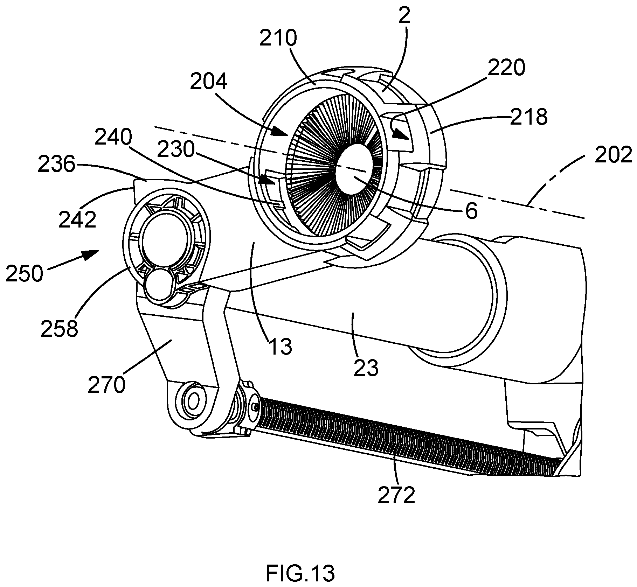

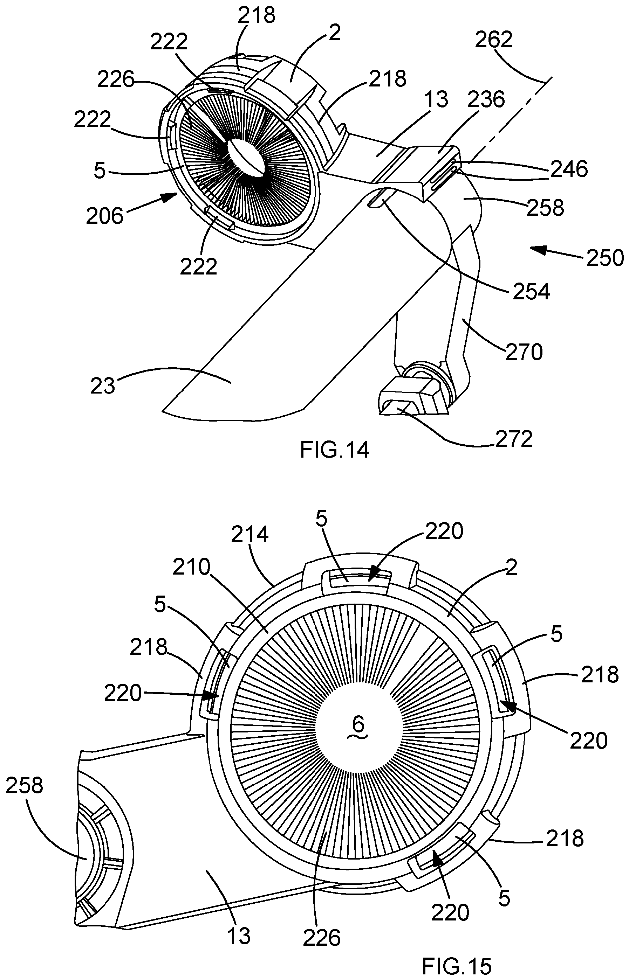

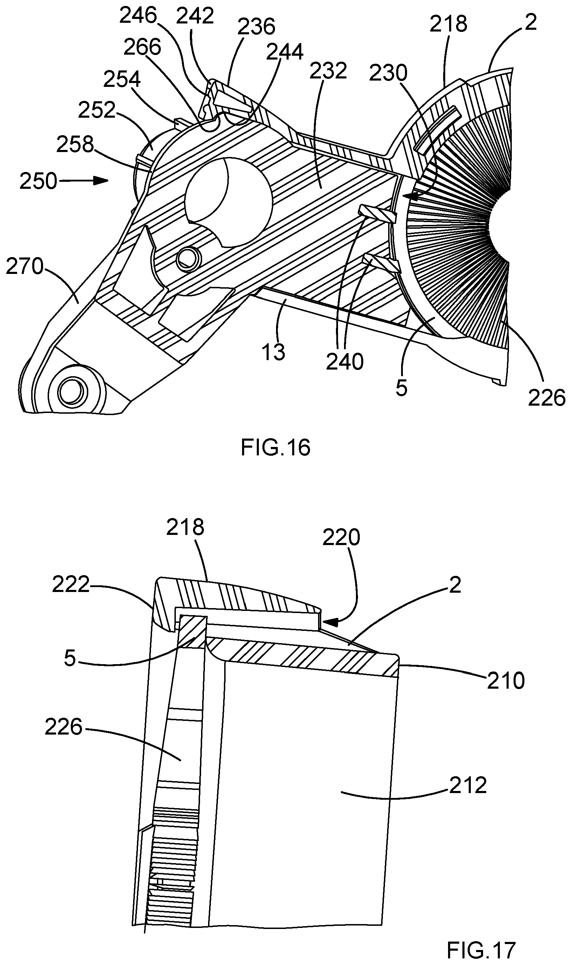

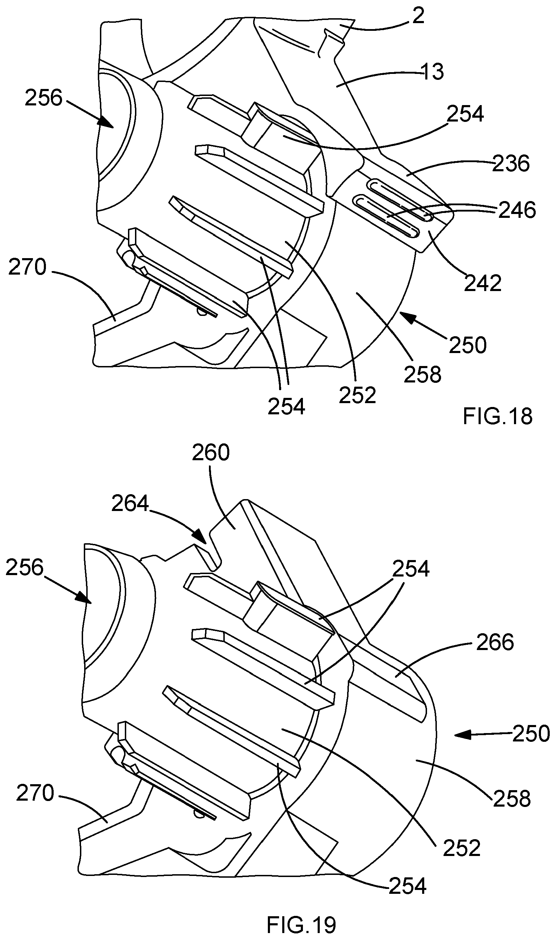

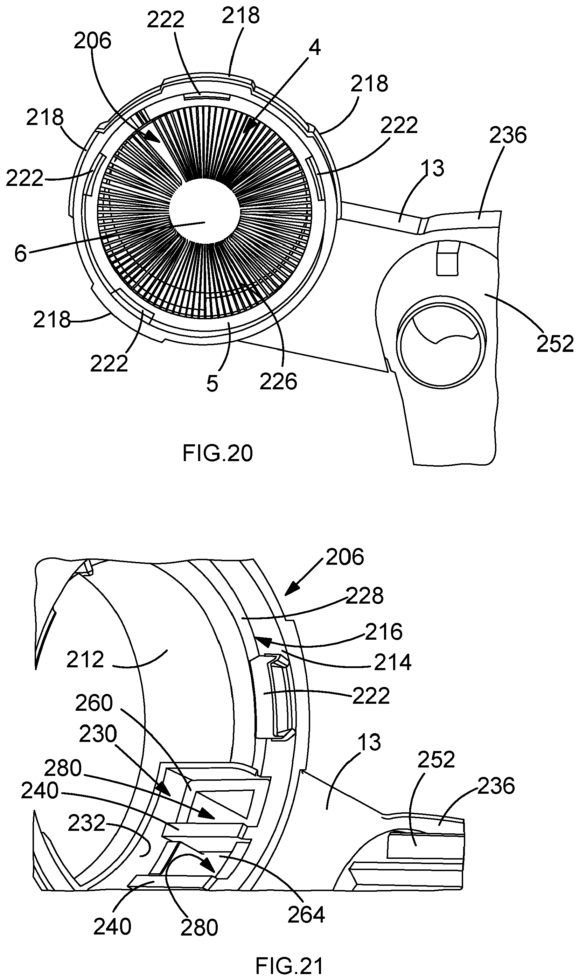

An embodiment of the present invention will now be described with reference to Figures 13 to 23. Where the same features are used in the embodiment which are used in the prior art shroud and dust extractor as described with reference to Figures 1 to 11 or the stop bot described with reference to Figure 12, the same reference numbers have been used. The invention relates to a new design of shroud and new attachment mechanism for the shroud to a dust extractor.

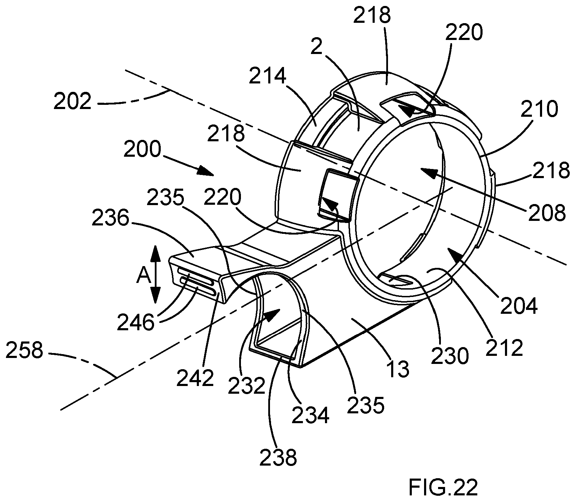

The shroud comprises a main housing 200 (Figure 22 shows the main housing 200 only of the shroud) which is manufactured from plastic and is formed as a one piece construction. The main housing 200 has a body portion 2 which is formed as a tubular housing 210, 214 which is tubular in shape with a longitudinal axis 202 and of circular cross section. The body portion 2 is connected to an engaging portion 13 which connects to the telescopic arm 23 of a dust collector. The body portion 2 has two circular openings which are centred on the longitudinal axis 202 at either end of the body 3, a first opening 204 formed by a first inlet at the front of the body portion and a second opening 206 formed by a second inlet at the rear of the body portion 3. The openings 204, 206 are aligned with each other and connect to each other via a passageway 208 of circular cross section formed between the two openings in the direction of the longitudinal axis 202. The planes of the two openings 204, 206 are parallel to each other, the planes being perpendicular to the longitudinal axis 202.

The body portion 2 comprises a central core section 210, the inner surface of which forms the wall 212 of the passageway 208, the inner surface being located symmetrically about the longitudinal axis 202. Radius of inner surface of core from axis is 20.173 mm. Formed around the rear end of the central core section 210 is a rim 214. The rim 214 extends rearwardly of the core to form a ledge 216 located between the end 228 of the core 214 and the inner surface if the rim 214. The rim 214 surrounds the second opening 206.

Formed around the outer surface of the body portion 2 are four raised portions 218 which extend from the front of the body portion 2 to rear. Each raised portion 218 comprises a rectangular passage 220. The rectangular passage 220 is formed during the manufacturing process of the shroud when the plastic material in the central region of the raised portion is pushed rearwardly to form hooks 222 which project inwardly from the inner surface of the rim 214.

A seal 4 is mounted inside the second opening 206. The seal 4 comprises a circular metal ring 5 attached to which are bristles 226 which extend radially inwardly to form a circular gap 6. The outer diameter of the metal ring 5 is slightly less than that of the inner diameter of the rim 214 but greater than the inner diameter of the core 210. When the seal 4 is mounted on the body portion 2, the circular metal ring 5 is located on the ledge 216 and held in place against the end 228 of the core 214 by the hooks 222. The centres of the metal ring 5 and the gap 6 locate on the longitudinal axis 202 of the body 200. The diameter of the hole in bristles is 15mm diameter. The hooks 222 hold the seal in such a manner that the seal 4 can freely rotate around the longitudinal axis whilst being held within the ledge by the hooks 222. The length of the bristles may be longer, equal to or shorter than the length of the body portion 2.

The engaging portion 13 has a tubular housing which is tubular in shape having a rectangular cross section to form four walls and which is attached to the side of the body portion 2 and projects in a direction along its longitudinal axis 298 which is perpendicular to the longitudinal axis 202 of the body portion 2. The engaging portion 13 forms a passageway 232 which extends through the length of the engaging portion 13. The body portion 2 comprises a third opening 230 which formed through a side wall of the body portion 2. One end of the passageway 232 connects with the third opening 230 allowing air to pass between the passageway 208 of the body portion 2 and the passageway 232 of the engaging portion 13. Ribs 240 are formed across the third opening 230.

The end 234 of the engaging portion13 remote from the body portion comprises a fourth opening formed by a third inlet which is defined by the edge of the walls of the engaging portion 13. Two opposite edges 235 are curved in a symmetrical manner. The top wall 236 above and between the two curved side walls extends further away from the body portion 2 than the bottom wall 238. The top wall 236 is resiliently deformable and can flex in the direction of Arrow A. On the lower side of the top wall 236, located in close proximity to the end 242 is a recess 244. Formed on the end of top wall 236 is a finger engagement zone which comprises two rubber grips 246. A user is able to flex the top wall 236 to move it relative to the rest of the engaging portion 13 in the direction of Arrow A be placing a finger on the end 242 of the top wall 236 to frictionally engage with the grips 246 and then move the end of the top wall in an up and down direction.

Mounted on the end of the telescopic arm 23 of a dust extractor is a stop 250. The dust extractor can be any type of dust extractor which can be mounted on a drill and which has a telescopic arm through which air and dust are sucked from a shroud into the dust extractor. A type of dust extractor has been described previously with reference to Figures 1 to 11. Whilst the present invention can be used with this design of dust extractor, the invention should not be limited to this specific design and can be used on a wide range of designs.

The stop has a tubular plug 252 which forms a passageway 256 and which comprises a series of external ribs 254. The tubular plug 252 is inserted into the end of the telescopic arm 23 with the passageway 256 mating with a passageway (not shown) inside of the telescopic arm 23. The ribs 254 engage with corresponding recesses (not shown) formed in the end of the telescopic arm 23 to secure the stop to the telescopic arm.

The stop 252 further comprises an end piece 258 which is attached to the end of the plug 252 and a insertion tube 260 connected to the side of the end piece 258. The insertion tube 260 is tubular in shape having a rectangular cross section and which projects in a direction which is perpendicular to a longitudinal axis 262 of the telescopic arm 23. The insertion tube 260 forms a passageway 280 which extends through the length of the insertion tube 260. The passageway 280 of the insertion tube 260 connects to the passageway 256 of the plug 252 via a passageway (not shown) formed through the end piece 258. The outer dimensions of the insertion tube 260 are slightly less than those of the inner surface of the passageway 232 of the engaging portion 13 so that the insertion tube 260 can be inserted into the passageway 232 of the engaging portion 13. Slots 264 are formed in the end of the insertion tube 260 remote from the end piece 258.

Formed on the top of the end piece 258 is a locking ridge 266 which extends in a direction parallel to the longitudinal axis 262 of the telescopic arm 23.

An arm 270 extends from the end piece 258 is a direction perpendicular to both the direction of the longitudinal axis of the telescopic tube and the direction the insertion tube 260. The arm 270 is used to support the end of a depth stop 272 of the dust extractor which connects to the end of the arm 270.

In order to attach the shroud 200 to the stop 250, the insertion tube 260 is inserted into the passageway 232 of the engaging portion 13 until the end 242 of the top wall 236 engages with the locking ridge 266. As the insertion tube 260 continues to be inserted into the passageway 232 of the engaging portion 13, the top wall 236 bends to allow the end 242 to ride over the locking ridge 266. Once the insertion tube 260 is fully inserted into the passageway 232 of the engaging portion 13, the recess 244 on the underside of the top wall 236 aligns with the locking ridge 266 of the end piece 258, allowing the top wall 236 to return to its original shape due to its resilient nature, the locking ridge 266 entering recess 244 as it does so. The locking ridge 266 is held in engagement in the recess by the resilient nature of the top wall 236. When the insertion tube 260 is fully inserted into the passageway 232 of the engaging portion 13, ribs 240 of the shroud 200 locate within the slots 264 formed in the end of the insertion tube 260. When the insertion tube 260 is fully inserted into the passageway 232 of the engaging portion 13, the two opposite curved side walls and bottom wall 238 abut against the end piece. When the insertion tube 260 is fully inserted into the passageway 232 of the engaging portion 13, the top wall wraps around the end piece 258.

The engagement of the locking ridge 266 and the recess 244 locks the shroud to the stop 252, the shroud's relative orientation and position being maintained by the co-operation the insertion tube 260 and the passageway 232 in the engaging portion 13 due to their relative size and shape which prevents any rotational movement between them. When the locking ridge 266 is held in engagement in the recess 244 by the resilient nature of the top wall 236, the insertion tube 260 is locked to the engaging portion 13 and is prevented from any axial movement within the engaging portion 13. The engagement of the locking ridge 266 with the recess 244, together with the ribs 240 and their engagement with the slots 264, ensure that the insertion tube 260 is securely locked to the engagement portion 13 and is prevented from making any axial movement.

In order to remove the insertion tube 260 from the engaging portion 13, a user needs to flex the top wall 236 to move it relative to locking ridge 266 to disengage the locking ridge 266 from the recess 244. The user achieves this by placing a finger on the end 242 of the top wall 236 to frictionally engage with the grips 246 and then move the end 242 of the top wall 236 in an upward direction so that the locking ridge 266 becomes disengaged from the recess 244. Once the locking ridge 266 is disengaged from the recess, the insertion tube can be slid out of the engaging portion 13.

In order to use the shroud with a stop bit, a stop bit is placed in and held by a tool holder of a hammer drill. The shroud is attached to the stop 252 of a dust extractor in the manner described above. The dust extractor is then attached to the hammer drill. The hammer drill and dust extractor are activated. Then the body portion 2 of the shroud is placed against the surface 290 of a work piece to be drilled with the front rim surrounding the opening 204 engaging the surface 290. The operator pushes the hammer drill towards the surface 290 moving the tip 106 of the stop bit through the seal 4 and then through the passageway 208 of the body portion 2 until engages with the surface of the work piece. As the hammer drill moves forward, the length of the telescopic arm 23 reduces to allow for the relative movement between the shroud and the hammer drill. The operator continues to move the hammer drill forward as the tip 106 of the stop bit penetrates the work piece. As the tip 106 penetrates the work piece, the flange 110 of the stop bit also passes through the seal 4 and then through the passageway 208 of the body portion 2 until the side of the flange 110 engages with the surface 290 of the work piece. Once the side of the flange 110 engages with the surface 290, the stop bit is prevented from penetrating the surface 290 any further. As such, the hammer drill can switched off and the tip 106 of the stop bit removed from the work piece. As the stop bit is penetrating the work piece, and dust or debris is collected inside of the passageway 208 of the body portion 2 and is then sucked through passageway 232 of the engaging portion 13 by the dust extractor. The seal 4 prevents any dust or debris exiting the passageway 208 through the rear opening 206 of the body portion 2.

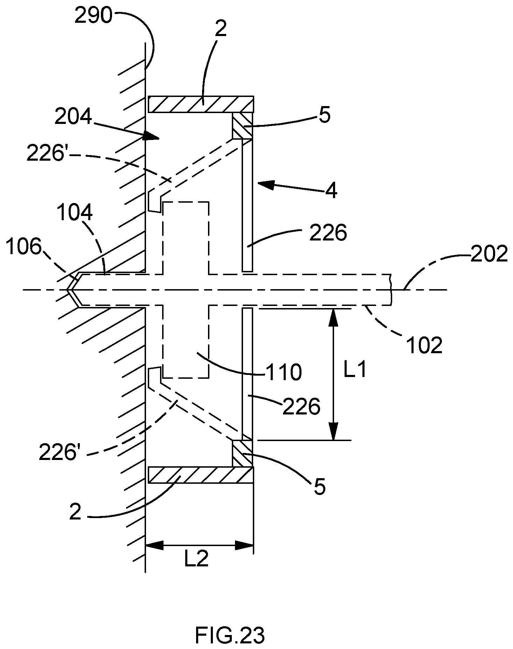

If the radial length of the seal 4 (which is the length of the bristles 226), indicated by Arrow L1 in Figure 23, is longer than the length of the tubular housing 210, 214 of the body portion 2, the ends of the bristles 226 of the seal may become trapped between the surface of the work piece and the side wall of the flange 110 of the stop bit (as shown in Figure 23). Whilst trapped the stop bit may continue to rotate. However, as the seal 4 is mounted in a freely rotatable manner, a rotational force applied to the seal 4 by the rotating stop bit will not damage the seal as it is able to rotate with the stop bit.

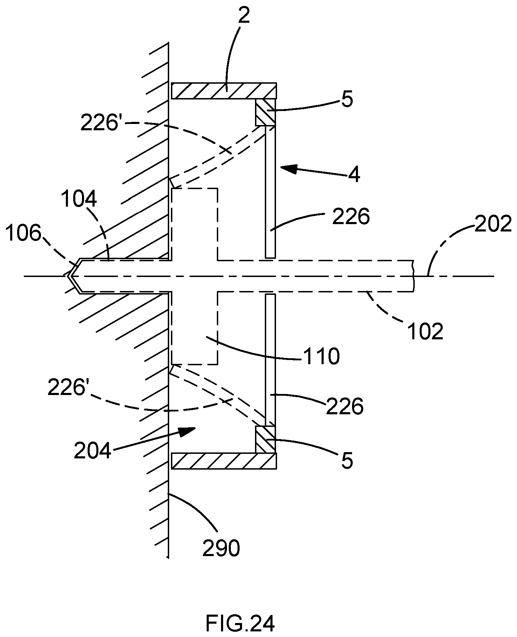

One way of ensuring that the ends of the bristles 226 of the seal do not become trapped between the surface of the work piece and the side wall of the flange 110 of the stop bit is to make the radial length L1 the seal (4) less than that of the length L2 of the tubular housing 210, 214 of the body portion 2 as shown in Figure 24. As such the ends of the bristles 226 will merely rub along to outer edge of the flange 110 or locate behind it.

It will be appreciated that, as an alternative, the hooks 222 could be made to hold the seal 4 in such a manner that the seal 4 is either prevented from rotating around the longitudinal axis whilst being held within the ledge by the hooks 222 or only rotates when a certain level of force is applied, for example, due to friction, or only rotates over a limited range of angular movement. This may be desirable if the radial length L1 the seal (4) less than that of the length L2 of the body portion 2.

It will be further appreciated that other types of seal can be used instead bristles. The seal could be rubber ring for example.

It will be appreciated by persons skilled in the art that the above embodiment have been described by way of example only and not in any limitative sense, and that various alterations and modifications are possible without departure from the scope of the invention as defined by the appended claims.

## Claims

1. A combination of a stop bit and a shroud for a dust extractor:
wherein the stop bit comprises:
an elongate shank (100), having a longitudinal axis and a circular cross section, with a connecting end (102) and a cutting end (104), the cutting end (104) comprises a drill bit tip (106) formed on the end of the cutting end (104), which is used to penetrate a work piece;
a series of helical ridges (108) extending around the shank away from the drill bit tip (106) which remove debris, generated by the cutting action of the drill bit tip (106), away from the drill bit tip (106);
a radial flange (110) formed on the shank (100) between the connecting end (102) and the cutting end 104, the flange (110) having a diameter D1 which is substantially larger than the diameter of the shank (100) D2 and
extends in a direction which is perpendicular to a longitudinal axis of the shank (100);
wherein the flange (110) is located at a pre-determined distance from the drill bit tip (106) to limit the amount the drill bit tip (106) can penetrate the surface of a work piece by the side of the flange (110) engaging with the surface of a work piece once the drill it tip (106) has penetrated a surface of a work piece by the pre-determined distance to prevent the drill bit tip (106) from penetrating any further;
wherein the shroud comprises:
a body portion (2) and an engaging portion (13);
wherein the body portion (2) comprises:
a tubular housing (210, 214) having a first inlet formed at a front end defining a first opening (204) and a second inlet formed at the rear end defining a second opening (206), wherein the tubular housing forms a passageway (208) which connects the two openings (204, 206), and which comprises a longitudinal axis (202);
wherein the engaging portion (13) comprises:
a tubular housing which connects at one end to a side of the body portion (2) and which forms a passageway (232) which comprises a longitudinal axis (298) and which extends the length of the tubular housing of the engaging portion (13), the tubular housing, at one end, connects to a third opening (230) formed through the wall of the body portion (2) to connect the passageway (232) of the engaging portion (13) with the passageway (208) of the body portion (2) and at the other end (234), remote from the body portion (2), comprises a third inlet defining a fourth opening;
**characterised in that** there is provided a seal (4) mounted in the second inlet of the body portion, the outer edge of the seal (4) being attached to the periphery of the second inlet, the seal (4) projecting radially inwardly towards the longitudinal axis (202) of the tubular body;
wherein the radial length L1 the seal (4) is less that the length L2 of the tubular body (210, 214);
wherein, during use, the tip (106) of the stop bit is moved through the seal (4) and then through the passageway (208) of the body portion (2) until engages with and penetrates a surface of a work piece, the flange (110) of the stop bit also passing through the seal (4) and then through the passageway (208) of the body portion (2) until the side of the flange (110) engages with a surface (290) of a work piece and the seal (4) rubs along the outer edge of the flange (110) or locates behind it.

2. A combination as claimed in claim 1 wherein the seal (4) is mounted in the second inlet of the body portion (2) in a freely rotatable manner.

3. A combination as claimed in either of claims 1 or 2 wherein the passageway (208) of the tubular housing of the body portion (2) is circular in cross section; wherein the inner radius of the passageway (208) in cross section is greater than 20mm.

4. A combination as claimed in any of the previous claims wherein the openings (204, 206) are aligned with each other and connect to each other via the passageway (208) of circular cross section formed between the two openings in the direction of the longitudinal axis 202.

5. A combination as claimed in any of the previous claims wherein the planes of the two openings (204, 206) are parallel to each other, the planes being perpendicular to the longitudinal axis (202).

6. A dust extraction apparatus comprising:
a main body;
a telescopic arm (23) which is attached to and extends away from the main body;
a stop (250) attached to the end of the telescopic arm remote from the body;
a shroud of a combination in accordance with any one of claims 1 to 5 mounted on the stop;
wherein the stop comprises a insertion tube (260) and end piece, the insertion tube being attached to the end piece;
wherein the end piece (258) comprises a ridge (266);
wherein, when the shroud is mounted on the stop, the insertion tube is inserted through the third inlet and into the passageway (232) of the engaging portion until the third inlet abuts against the end piece and the ridge engages with the recess.

## Patentansprüche

1. Kombination aus einem Anschlagteil und einer Hülse für eine Staubextraktionseinrichtung:
wobei das Anschlagteil Folgendes umfasst:
einen länglichen Schaft (100), der eine Längsachse und einen kreisförmigen Querschnitt mit einem Verbindungsende (102) und einem Schneidende (104) aufweist, wobei das Schneidende (104) eine Bohrkopfspitze (106) umfasst, die an dem Ende des Schneidendes (104) gebildet ist und die verwendet wird, um ein Werkstück zu durchdringen;
eine Reihe von spiralförmigen Rippen (108), die sich um den Schaft von der Bohrkopfspitze (106) weg erstreckt und die Ablagerungen, die durch die Schneidwirkung der Bohrkopfspitze (106) erzeugt werden, von der Bohrkopfspitze (106) weg entfernt;
einen radialen Flansch (110), der zwischen dem Verbindungsende (102) und dem Schneidende 104 an dem Schaft (100) gebildet ist, wobei der Flansch (110) einen Durchmesser D1 aufweist, der wesentlich größer als der Durchmesser des Schafts (100) D2 ist und sich in einer Richtung erstreckt, die senkrecht zu einer Längsachse des Schafts (100) ist;
wobei sich der Flansch (110) in einer vorbestimmten Entfernung von der Bohrkopfspitze (106) befindet, um das Ausmaß zu begrenzen, in dem die Bohrkopfspitze (106) durch die Seite des Flansches (110), die mit der Oberfläche eines Werkstücks in Eingriff steht, in die Oberfläche des Werkstücks eindringen kann, sobald die Bohrkopfspitze (106) um die vorbestimmte Entfernung in eine Oberfläche eines Werkstücks eingedrungen ist, um zu verhindern, dass die Bohrkopfspitze (106) weiter eindringt;
wobei die Hülse Folgendes umfasst:
einen Körperabschnitt (2) und einen Eingriffsabschnitt (13);
wobei der Körperabschnitt (2) Folgendes umfasst:
ein rohrförmiges Gehäuse (210, 214), das einen ersten Einlass, der an einem vorderen Ende gebildet ist, das eine erste Öffnung (204) definiert, und einen zweiten Einlass aufweist, der an dem hinteren Ende gebildet ist, das eine zweite Öffnung (206) definiert, wobei das rohrförmige Gehäuse einen Durchgang (208) bildet, der die zwei Öffnungen (204, 206) verbindet und der eine Längsachse (202) umfasst;
wobei der Eingriffsabschnitt (13) Folgendes umfasst:
ein rohrförmiges Gehäuse, das an einem Ende mit einer Seite des Körperabschnitts (2) verbunden ist und das einen Durchgang (232) bildet, der eine Längsachse (298) umfasst und der sich über die Länge des rohrförmigen Gehäuses des Eingriffsabschnitts (13) erstreckt, wobei das rohrförmige Gehäuse an einem Ende mit einer dritten Öffnung (230) verbunden ist, die durch die Wand des Körperabschnitts (2) gebildet ist, um den Durchgang (232) des Eingriffsabschnitts (13) mit dem Durchgang (208) des Körperabschnitts (2) zu verbinden, und an dem anderen Ende (234), das von dem Körperabschnitt (2) entfernt ist, einen dritten Einlass umfasst, der eine vierte Öffnung definiert;
**dadurch gekennzeichnet, dass** eine Dichtung (4) bereitgestellt ist, die in dem zweiten Einlass des Körperabschnitts montiert ist, wobei die Außenkante der Dichtung (4) an dem Umfang des zweiten Einlasses angebracht ist, wobei die Dichtung (4) radial nach innen in Richtung der Längsachse (202) des rohrförmigen Körpers vorsteht;
wobei die radiale Länge L1 der Dichtung (4) kleiner als die Länge L2 des rohrförmigen Körpers (210, 214) ist;
wobei während einer Verwendung die Spitze (106) des Anschlagteils durch die Dichtung (4) und dann durch den Durchgang (208) des Körperabschnitts (2) bewegt wird, bis sie mit einer Oberfläche eines Werkstücks in Eingriff kommt und diese durchdringt, wobei der Flansch (110) des Anschlagteils auch durch die Dichtung (4) und dann durch den Durchgang (208) des Körperabschnitts (2) verläuft, bis die Seite des Flansches (110) mit einer Oberfläche (290) eines Werkstücks in Eingriff kommt und die Dichtung (4) entlang der Außenkante des Flansches (110) reibt oder sich dahinter befindet.

2. Kombination nach Anspruch 1, wobei die Dichtung (4) in dem zweiten Einlass des Körperabschnitts (2) auf frei drehbare Weise montiert ist.

3. Kombination nach einem der Ansprüche 1 oder 2, wobei der Durchgang (208) des rohrförmigen Gehäuses des Körperabschnitts (2) im Querschnitt kreisförmig ist;
wobei der Innenradius des Durchgangs (208) im Querschnitt größer als 20 mm ist.

4. Kombination nach einem der vorhergehenden Ansprüche, wobei die Öffnungen (204, 206) miteinander ausgerichtet sind und über den Durchgang (208) mit kreisförmigem Querschnitt, der zwischen den zwei Öffnungen in der Richtung der Längsachse 202 gebildet ist, miteinander verbunden sind.

5. Kombination nach einem der vorhergehenden Ansprüche, wobei die Ebenen der zwei Öffnungen (204, 206) parallel zueinander sind, wobei die Ebenen senkrecht zu der Längsachse (202) sind.

6. Staubextraktionsvorrichtung, umfassend:
einen Hauptkörper;
einen Teleskoparm (23), der an dem Hauptkörper angebracht ist und sich von diesem weg erstreckt;
einen Anschlag (250), der an dem von dem Körper entfernten Ende des Teleskoparms angebracht ist;
eine Hülse einer Kombination nach einem der Ansprüche 1 bis 5, die an dem Anschlag montiert ist;
wobei der Anschlag ein Einführrohr (260) und ein Endstück umfasst, wobei das Einführrohr an dem Endstück angebracht ist;
wobei das Endstück (258) eine Rippe (266) umfasst;
wobei, wenn die Hülse an dem Anschlag montiert ist, das Einführrohr durch den dritten Einlass und in den Durchgang (232) des Eingriffsabschnitts eingeführt wird, bis der dritte Einlass an dem Endstück anliegt und die Rippe mit der Aussparung in Eingriff steht.

## Revendications

1. Combinaison d'un foret à butée et d'un carénage pour un extracteur de poussière :
ledit foret à butée comprenant :
une tige allongée (100), possédant un axe longitudinal et une section transversale circulaire, dotée d'une extrémité de raccordement (102) et d'une extrémité de coupe (104), l'extrémité de coupe (104) comprend une pointe de foret de perçage (106) formée à l'extrémité de l'extrémité de coupe (104), qui est utilisée pour pénétrer dans une pièce à usiner ;
une série d'arêtes hélicoïdales (108) s'étendant autour de la tige en s'éloignant de la pointe de foret de perçage (106) qui éliminent les débris, générés par l'action de coupe de la pointe de foret de perçage (106), à l'écart de la pointe de foret de perçage (106) ;
une bride radiale (110) formée sur la tige (100) entre l'extrémité de raccordement (102) et l'extrémité de coupe 104, la bride (110) présentant un diamètre D1 qui est sensiblement plus grand que le diamètre de la tige (100) D2 et s'étend suivant une direction perpendiculaire à l'axe longitudinal de la tige (100) ;
ladite bride (110) étant située à une distance prédéfinie de la pointe de foret de perçage (106) pour limiter la quantité avec laquelle la pointe de foret de perçage (106) peut pénétrer dans la surface d'une pièce à usiner par le côté de la bride (110) en se mettant en prise dans la surface d'une pièce à usiner une fois que la pointe de foret de perçage (106) a pénétré dans une surface d'une pièce à usiner de la distance prédéfinie pour empêcher la pointe du foret de perçage (106) de pénétrer davantage ;
ledit carénage comprenant :
une partie corps (2) et une partie de mise en prise (13) ;
ladite partie corps (2) comprenant :
un logement tubulaire (210, 214) comportant une première entrée formée au niveau d'une extrémité avant définissant une première ouverture (204) et une deuxième entrée formée au niveau de l'extrémité arrière définissant une deuxième ouverture (206), ledit logement tubulaire formant un passage (208) qui relie les deux ouvertures (204, 206), et qui comprend un axe longitudinal (202) ;
ladite partie de mise en prise (13) comprenant :
un logement tubulaire qui se raccorde au niveau d'une extrémité à un côté de la partie corps (2) et qui forme un passage (232) qui comprend un axe longitudinal (298) et qui s'étend sur la longueur du logement tubulaire de la partie de mise en prise (13), le logement tubulaire, au niveau d'une extrémité, se raccorde à une troisième ouverture (230) formée à travers la paroi de la partie corps (2) pour raccorder le passage (232) de la partie de mise en prise (13) au passage (208) de la partie corps (2) et au niveau de l'autre extrémité (234), à distance de la partie corps (2), comprend une troisième entrée définissant une quatrième ouverture ;
**caractérisée en ce qu'**il est disposé un joint (4) monté dans la deuxième entrée de la partie corps, le bord extérieur du joint (4) étant fixé à la périphérie de la deuxième entrée, le joint (4) faisant saillie radialement vers l'intérieur en direction de l'axe longitudinal (202) du corps tubulaire ;
ladite longueur radiale L1 du joint (4) étant inférieure à la longueur L2 du corps tubulaire (210, 214) ;
pendant l'utilisation, ladite pointe (106) du foret à butée étant déplacée à travers le joint (4) puis à travers le passage (208) de la partie corps (2) jusqu'à ce qu'elle se mette en prise avec une surface d'une pièce à usiner et pénètre dans celle-ci, la bride (110) du foret à butée passant également à travers le joint (4) puis à travers le passage (208) de la partie corps (2) jusqu'à ce que le côté de la bride (110) se mette en prise avec une surface (290) d'une pièce à usiner et que le joint (4) frotte le long du bord externe de la bride (110) ou se trouve derrière elle.

2. Combinaison selon la revendication 1, ledit joint (4) étant monté dans la deuxième entrée de la partie corps (2) de manière à pouvoir tourner librement.

3. Combinaison selon l'une quelconque des revendications 1 ou 2, ledit passage (208) du logement tubulaire de la partie corps (2) possédant une section transversale circulaire ;
ledit rayon interne du passage (208) en section transversale étant supérieur à 20 mm.

4. Combinaison selon l'une quelconque des revendications précédentes, lesdites ouvertures (204, 206) étant alignées les unes avec les autres et se reliant les unes aux autres par le biais du passage (208) de section transversale circulaire formé entre les deux ouvertures suivant la direction de l'axe longitudinal 202.

5. Combinaison selon l'une quelconque des revendications précédentes, lesdits plans des deux ouvertures (204, 206) étant parallèles l'un à l'autre, les plans étant perpendiculaires à l'axe longitudinal (202).

6. Appareil d'extraction de poussière comprenant :
un corps principal ;
un bras télescopique (23) qui est fixé au corps principal et s'étend en s'éloignant de celui-ci ;
une butée (250) fixée à l'extrémité du bras télescopique à distance du corps ;
un carénage d'une combinaison selon l'une quelconque des revendications 1 à 5 monté sur la butée ;
ladite butée comprenant un tube d'insertion (260) et une pièce d'extrémité, ledit tube d'insertion étant fixé à la pièce d'extrémité ;
ladite pièce d'extrémité (258) comprenant une arête (266) ;
lorsque ledit carénage est monté sur la butée, ledit tube d'insertion étant inséré à travers la troisième entrée et dans le passage (232) de la partie de mise en prise jusqu'à ce que la troisième entrée bute contre la pièce d'extrémité et que l'arête se mette en prise avec l'évidement.
